# EUROPEAN PATENT APPLICATION

(11) **EP 3 911 056 A1**
(43) Date of publication of application: **17.11.2021**
(21) Application number: 19908816.2
(22) Date of filing: 10.01.2019
(51) Int. Cl.: H04W 72/02, H04W 72/04

(54) **USER DEVICE AND COMMUNICATION METHOD**

(71) Applicant: NTT DOCOMO, INC., Chiyoda-Ku Tokyo 100-6150 (JP)
(72) Inventor: OHARA, Tomoya, Tokyo 100-6150 (JP)
(74) Representative: Hoffmann Eitle
(86) International application number: PCT/JP2019/000608
(87) International publication number: WO 2020/144834

(57) **Abstract**

There is provided a user equipment including a receiving unit configured to receive a downlink signal; and a control unit configured to select a second component carrier in an active state for monitoring a downlink control channel among a plurality of component carriers, in response to deactivation of a first component carrier in an active state among the plurality of component carriers.

## Description

### TECHNICAL FIELD

The present invention relates to a user equipment and a communication method in a radio communication system.

### BACKGROUND ART

In Release 16 in RAN1 of 3GPP, Study Item (SI) of Study on UE Power Saving for NR has started, and reduction of the power consumption of user equipment is studied.

In Release 15 of NR, for example, when carrier aggregation (CA) is being performed, a Physical Downlink Control Channel (PDCCH) is monitored by in certain CC among a plurality of component carriers (CC) to receive a Downlink Control Information (DCI), and with the received DCI, Physical Downlink Shared Channel (PDSCH), Physical Uplink Shared Channel (PUSCH), or the like can be scheduled via a CC other than the CC on which the DCI is received. Such scheduling is referred to as cross carrier scheduling.

### Related Art Document

### [Non-Patent Document]

Non-Patent Document 1: 3GPP TS 38.331 V15.3.0 (2018-09)

### SUMMARY OF THE INVENTION

### [PROBLEM TO BE SOLVED BY THE INVENTION]

When there are a large number of CCs on which PDCCH monitoring is performed, the power consumption of a user equipment increases. By performing PDCCH monitoring on one CC and receiving a DCI while using the above-described cross-carrier scheduling, for example, a user equipment can schedule PDSCH/PUSCH or the like for multiple CCs based on the received DCI. As a result, the number of CCs on which PDCCH monitoring is performed can be reduced, and accordingly, the power consumption of the user equipment can be reduced. That is, by performing cross-carrier scheduling, the user equipment can reduce the power consumption. In a case where the user equipment performs PDCCH monitoring by using a single CC and receives a DCI to schedule PDSCH/PUSCH, or the like for other CCs, if the single CC on which PDCCH monitoring is performed is deactivated, the user equipment becomes unable to perform PDCCH monitoring by using the single CC.

Accordingly, there is a need for a technique for quickly switching a CC on which PDCCH monitoring operation is performed while keeping power consumption of a user equipment reduced.

### [MEANS FOR SOLVING THE PROBLEM]

According to an aspect of the present invention, provided is a user equipment including a receiving unit configured to receive a downlink signal; and a control unit configured to select a second component carrier in an active state for monitoring a downlink control channel among a plurality of component carriers, in response to deactivation of a first component carrier in an active state among the plurality of component carriers.

### [ADVANTAGE OF THE INVENTION]

According to an embodiment, a CC on which PDCCH monitoring operation is performed can be quickly switched while keeping power consumption of a user equipment reduced.

### BRIEF DESCRIPTION OF DRAWINGS

FIG. 1 is a diagram illustrating a configuration example of a radio communication system according to an embodiment;
FIG. 2 is a diagram illustrating an example of configuration information transmitted to a user equipment;
FIG. 3 is a diagram illustrating Operation Example 1;
FIG. 4 is a diagram illustrating an example of configuration information transmitted to a user equipment;
FIG. 5 is a diagram illustrating Operation Example 2;
FIG. 6 is a diagram illustrating an example of a functional configuration of a base station 10 according to an embodiment;
FIG. 7 is a diagram illustrating an example of a functional configuration of a user equipment 20 according to an embodiment; and
FIG. 8 is a diagram illustrating an example of a hardware configuration of the base station 10 and the user equipment 20 according to an embodiment.

### [EMBODIMENTS OF THE INVENTION]

In the following, embodiments of the present invention (the embodiments) are described with reference to the drawings. The embodiments described below are merely examples, and the embodiments to which the present invention is applied are not limited to the following embodiments.

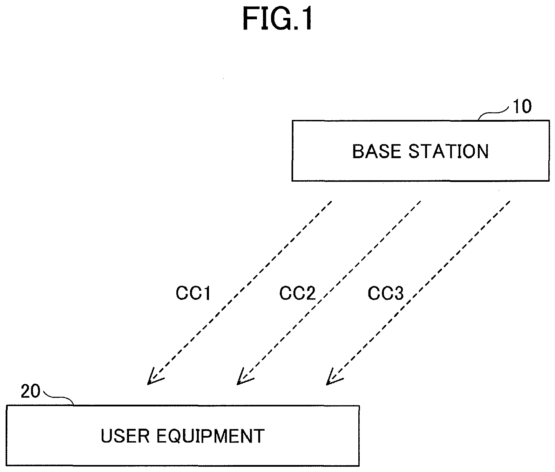

(System configuration) FIG. 1 is a diagram illustrating a configuration example of a radio communication system according to the present embodiment. As illustrated in FIG. 1, the radio communication system according to the present embodiment includes a base station 10 and a user equipment 20. Actually, there can be many base stations and units of user equipment, but FIG. 1 illustrates the base station 10 and the user equipment 20 as examples.

In the present embodiment, the user equipment 20 has cellular communication function as a UE in LTE or NR. Furthermore, the user equipment 20 has a function of communicating with the base station 10 by using a plurality of component carriers (CC) simultaneously. That is, the user equipment 20 has a function of performing carrier aggregation (CA) with the base station 10. In FIG. 1, three component carriers, namely, CC1, CC2, and CC3, are illustrated as component carriers, but the number of component carriers is not limited to three.

Furthermore, the base station 10 has cellular communication function as the base station 10 in LTE or NR. Furthermore, the base station 10 has a function of communicating with the user equipment 20 by using a plurality of component carriers (CC) simultaneously. That is, the base station 10 has a function of performing carrier aggregation (CA) with the user equipment 20.

In NR Release 15, for example, when carrier aggregation (CA) is being performed, a Physical Downlink Control Channel (PDCCH) is monitored by on certain CC among a plurality of component carriers (CC) to receive a Downlink Control Information (DCI), and with the received DCI, Physical Downlink Shared Channel (PDSCH)/Physical Uplink Shared Channel (PUSCH), or the like can be scheduled via a CC other than the CC from which the DCI is received. Such scheduling is referred to as cross carrier scheduling. In the present disclosure, a term "PDCCH monitoring" may mean "PDCCH configuration" or "a series of PDCCH monitoring configured by PDCCH configuration."

When the number of CCs on which PDCCH monitoring operation is performed is large, the power consumption of the user equipment 20 increases. By using the above-described cross-carrier scheduling, for example, the user equipment 20 performs PDCCH monitoring on a single CC and receives a DCI, and can schedule PDSCH, PUSCH, or the like for a plurality of CCs on the basis of the received DCI. As a result, the number of CCs on which PDCCH monitoring is performed can be reduced, and therefore, the power consumption of the user equipment 20 can be reduced. Namely, by performing cross-carrier scheduling, the user equipment 20 can reduce the power consumption.

### (Problems)

Here, as described above, in a case where the user equipment 20 performs PDCCH monitoring by using a single CC, receives a DCI, and performs scheduling of PDSCH/PUSCH, or the like for other CCs, if the single CC on which PDCCH monitoring is performed is deactivated, the user equipment 20 becomes unable to perform PDCCH monitoring operation by using the single CC.

Here, a CC for performing PDCCH monitoring can be switched by Radio Resource Control (RRC) signaling. However, since signaling and an operation by the RRC is an operation of a higher layer, it takes a long time as compared with the operation in the physical layer or the operation in the Medium Access Control (MAC) layer.

Thus, according to the method of switching a CC for performing PDCCH monitoring by RRC signaling, it takes a relatively long time to deactivate the CC, so that a time period during which the CC is in an active state is unnecessarily elongated. Or, it takes a longer time for the user equipment 20 to become ready to perform PDCCH monitoring operation, and in addition, after that, it takes time to send and receive data, and therefore, it takes a longer time for the user equipment 20 to complete sending and receiving data and transitions to a sleep mode. As a result, the power consumption of the user equipment 20 will increase.

Here, among the plurality of CCs used to perform CA, the CC to be deactivated is dynamically determined according to the congestion state and channel state of each CC. For this reason, it is difficult to assume in advance a CC to be deactivated. Furthermore, when PDCCH monitoring is performed on two or more CCs used for performing CA, the number of CCs on which PDCCH monitoring operation is performed increases, and accordingly, the power consumption of the user equipment 20 increases.

### (Proposal of solution)

When CA is performed using a plurality of CCs between the user equipment 20 and the base station 10, the user equipment 20 may start, in response to a trigger of deactivation of a certain CC among the plurality of CCs, PDCCH monitoring in another CC in an active state among the plurality of CCs. Starting PDCCH monitoring on another CC in active state in this manner may be referred to as activation of PDCCH monitoring (activation, transition to active state).

Furthermore, when CA is performed using a plurality of CCs between the user equipment 20 and the base station 10, the user equipment 20 may stop, in response to a trigger of activation of a certain CC among the plurality of CCs, PDCCH monitoring operation on another CC in an active state among the plurality of CCs. Stopping PDCCH monitoring operation on another CC in active state in this manner may be referred to as deactivation of PDCCH monitoring (deactivation, transition to deactivate state) .

Here, for the sake of simplification of the description, for example, it is assumed that CA is performed using CC#1, CC#2, and CC#3 between the user equipment 20 and the base station 10. For example, the user equipment 20 may start PDCCH monitoring operation on CC#2 in response to a trigger of deactivation of CC#1, which was in the active state, among CC#1, CC#2, and CC#3.

For example, the user equipment 20 may stop PDCCH monitoring operation on CC#2 in an active state, in response to a trigger of activation of CC#3, which was in the inactive state, among CC#1, CC#2, and CC#3.

As another example, the user equipment 20 may, for example, start PDCCH monitoring operation on CC#2 in response to a trigger of deactivation of CC#1, which was in the active state, among CC#1, CC#2, and CC#3, and thereafter, in response to reactivation of CC#1 again, the user equipment 20 may stop PDCCH monitoring on CC#2 and may start PDCCH monitoring on CC#1.

For example, activation and deactivation of a CC may be performed by the network using the MAC Control Element (MAC CE). The user equipment 20 detects the activation or deactivation of any one of the CCs by receiving the MAC CE from the network side, and stops or starts PDCCH monitoring operation on another CC in response to the detection. Furthermore, for example, activation and deactivation of a CC may be performed using the physical layer from the network. For example, activation or deactivation of any one of CCs may be signaled to the user equipment 20 by using DCI, power saving signal/channel, or the like. In response thereto, PDCCH monitoring on another CC is stopped or started. The power saving signal/channel includes PDCCH-based power saving signal/channel, TRS, CSI-RS, DMRS-based power saving signal/channel, SS-based power saving signal/channel, and the like.

In a case where the user equipment 20 activates PDCCH monitoring, for example, by RRC signaling, (1) information used for PDCCH monitoring operation, (2) information on a trigger for activation of PDCCH monitoring, and/or (3) information on a trigger for deactivation of PDCCH monitoring, may be signaled before PDCCH monitoring is activated.

Here, the information used for PDCCH monitoring is considered to include information used for usual PDCCH monitoring, for example, information related to search space (Search space), and information related to control resource set (CORESET), and the like. The information used for PDCCH monitoring may be an existing PDCCH configuration.

As the information on a trigger for activation of PDCCH monitoring, for example, activation of PDCCH monitoring in response to a trigger of deactivation of a specific CC among a plurality of CCs forming CA may be notified to the user equipment 20. For example, as the information about a trigger for activation of PDCCH monitoring, information indicating CC#1 may be notified to the user equipment 20. In this case, in response to deactivation of CC#1, the user equipment 20 may start configured PDCCH monitoring. As the specific CC, a plurality of CCs may be specified instead of a single CC.

In response to a trigger of deactivation of a CC corresponding to a specific PDCCH monitoring (which may be a specific search space or a specific CORESET), activation of configured PDCCH monitoring by the user equipment 20 may be notified to the user equipment 20. For example, information indicating a search space ID1 may be notified to the user equipment 20, and in this case, the user equipment 20 may start configured PDCCH monitoring in response to deactivation of a CC to which the search space ID1 belongs. As the specific PDCCH monitoring, a plurality of PDCCH monitorings may be specified. As the specific search space, a plurality of search spaces may be specified. As the specific CORESET, a plurality of CORESETs may be specified.

In addition, for example, when PDCCH monitoring is configured by RRC and the like, a notification indicating whether a default PDCCH monitoring immediately after the configuration of the PDCCH monitoring is in an active state or in an inactive state may be transmitted to the user equipment 20.

As the information about a trigger for deactivation of PDCCH monitoring, for example, deactivation of PDCCH monitoring in response to a trigger of activation of a specific CC among a plurality of CCs forming a CA may be notified to the user equipment 20. For example, as the information on a trigger for deactivation of PDCCH monitoring, information indicating CC#1 may be notified to the user equipment 20. In this case, in response to activation of CC#1, the user equipment 20 may stop the configured PDCCH monitoring. As the specific CC, a plurality of CCs may be specified instead of a single CC. It should be noted that in a case where, as the information on a trigger for activation of PDCCH monitoring, for example, activation of PDCCH monitoring in response to a trigger of deactivation of a specific CC among a plurality of CCs forming a CA is notified to the user equipment 20, PDCCH monitoring may be configured to be deactivated in response to a trigger of activation of the specific CC, without explicitly providing notification of the information about a trigger for deactivation of PDCCH monitoring.

In response to a trigger of activation of a CC corresponding to specific PDCCH monitoring (which may be a specific search space or a specific CORESET), deactivation of configured PDCCH monitoring by the user equipment 20 may be notified to the user equipment 20. For example, information indicating a search space ID1 may be notified to the user equipment 20, and in this case, the user equipment 20 may stop the configured PDCCH monitoring in response to activation of a CC to which the search space ID1 belongs. As the specific PDCCH monitoring, a plurality of PDCCH monitorings may be specified. As the specific search space, a plurality of search spaces may be specified. As the specific CORESET, a plurality of CORESETs may be specified. It should be noted that in a case where the user equipment 20 is notified of activation of configured PDCCH monitoring in response to a trigger of deactivation of a CC corresponding to specific PDCCH monitoring (which may be a specific search space or a specific CORESET), PDCCH monitoring may be configured to be deactivated in response to a trigger of activation of the CC corresponding to the specific PDCCH monitoring (which may be a specific search space or a specific CORESET), without explicitly notifying the information on a trigger for deactivation of PDCCH monitoring.

It should be noted that (2) the information on a trigger for activation of PDCCH monitoring, and/or (3) the information on a trigger for deactivation of PDCCH monitoring may be added to a normal PDCCH configuration. Based on this, the PDCCH configuration to which the information of (2), and/or the information of (3) are added may be notified by RRC signaling to the user equipment 20. Alternatively, an RRC configuration including (1) information used for PDCCH monitoring, (2) information on a trigger for activation of PDCCH monitoring, and/or (3) the information on a trigger for deactivation of PDCCH monitoring may be newly defined, and the RRC configuration may be signaled by RRC signaling to the user equipment 20.

In a case where the information of (2), and/or the information of (3) are added to normal PDCCH configuration, and when the user equipment 20 is to be configured with the PDCCH configuration, information indicating that PDCCH monitoring is always in an active state (i.e., information indicating that configured PDCCH monitoring is normal PDCCH monitoring), or information indicating that active state/inactive state of PDCCH monitoring may transition may be signaled to the user equipment 20.

For a single CC, the user equipment 20 may be configured with a single set of (1) the information used for PDCCH monitoring, (2) the information on a trigger for activation of PDCCH monitoring, and/or (3) the information on a trigger for deactivation of PDCCH monitoring. Alternatively, for a single CC, the user equipment 20 may be configured with a plurality of sets.

The information of (1), the information of (2), and/or the information of (3) may be signaled separately to the user equipment 20. The information of (2), and/or the information of (3) may be signaled to the user equipment 20 on a per PDCCH configuration basis. The information of (1), the information of (2), and/or the information of (3) may be separately signaled to the user equipment

20 on a per CC basis. For example, for a single CC, three PDCCH configurations may be signaled to the user equipment 20 as the information corresponding to (1), and a single set of information on a trigger of activation and information on a trigger of deactivation may be signaled to the user equipment 20 as the information of (2) and the information of (3), respectively. In this case, the user equipment 20 may apply the same trigger of activation and the same trigger of deactivation to the three PDCCH configurations.

### (Operation Example 1)

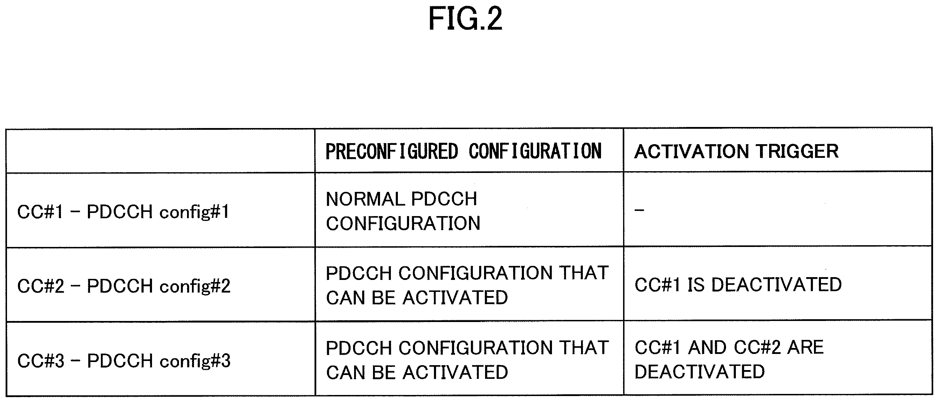

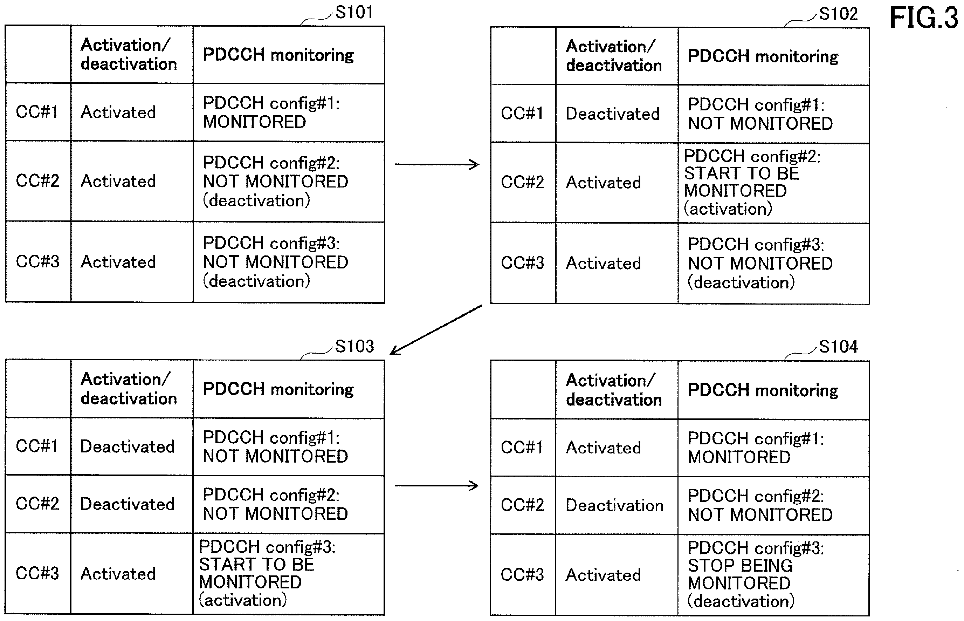

Subsequently, Operation Example 1 of the user equipment 20 is described with reference to FIG. 2 and FIG. 3. As the assumption of the description, the base station 10 and the user equipment 20 are communicating using CC#1, CC#2, and CC#3 at a same time. Namely, the base station 10 and the user equipment 20 are assumed to be performing carrier aggregation.

FIG. 2 illustrates configuration information (configuration) signaled to the user equipment 20 by RRC signaling and the like.

As illustrated in FIG. 2, for CC#1, the user equipment 20 is configured with a normal PDCCH configuration. A trigger of activation of PDCCH monitoring is not particularly configured, but, in accordance with the normal PDCCH configuration, when CC#1 is activated, the user equipment 20 activates PDCCH monitoring on CC#1, and when CC#1 is deactivated, the user equipment 20 deactivates PDCCH monitoring on CC#1.

For CC#2, the user equipment 20 is configured with a PDCCH configuration that reflects a trigger of activation of PDCCH monitoring. More specifically, deactivation of CC#1 is set as a trigger of activation of PDCCH monitoring on CC#2.

For CC#3, the user equipment 20 is configured with a PDCCH configuration that reflects a trigger of activation of PDCCH monitoring. More specifically, deactivation of CC#1 and CC#2 is set as a trigger of activation of PDCCH monitoring on CC#3. Here, an example is described in which a trigger of deactivation is not explicitly set, and the trigger of deactivation is implicitly determined corresponding to a trigger of activation. As a trigger of deactivation, a configuration corresponding to a trigger of activation may be explicitly defined.

Subsequently, the details of Operation Example 1 are described with reference to FIG. 3.

First, in step S101 illustrated in FIG. 3, the user equipment 20 detects that CC#1 is activated, CC#2 is activated, and CC#3 is activated. Accordingly, the user equipment 20 activates PDCCH monitoring on CC#1 according to the normal PDCCH configuration configured with regard to CC#1. In response to detecting that CC#1 is activated, the user equipment 20 deactivates PDCCH monitoring on CC#2 (PDCCH monitoring on CC#2 is not activated) according to PDCCH configuration configured with regard to CC#2. In response to detecting that CC#1 is activated and CC#2 is activated, the user equipment 20 deactivates PDCCH monitoring on CC#3 (PDCCH monitoring on CC#3 is not activated) according to PDCCH configuration configured with regard to CC#3.

Subsequently, in step S102 illustrated in FIG. 3, the user equipment 20 detects that CC#1 is deactivated, CC#2 is activated, and CC#3 is activated. Accordingly, the user equipment 20 deactivates PDCCH monitoring on CC#1 according to the normal PDCCH configuration configured with regard to CC#1. In response to detecting that CC#1 is deactivated, the user equipment 20 activates PDCCH monitoring on CC#2 according to the PDCCH configuration configured with regard to CC#2. In response to detecting that CC#1 is deactivated and CC#2 is activated, the user equipment 20 deactivates PDCCH monitoring on CC#3 (PDCCH monitoring on CC#3 is not activated) according to the PDCCH configuration configured with regard to CC#3.

Subsequently, in step S103 illustrated in FIG. 3, the user equipment 20 detects that CC#1 is deactivated, CC#2 is deactivated, and CC#3 is activated. Accordingly, the user equipment 20 deactivates PDCCH monitoring on CC#1 (PDCCH monitoring on CC#1 is not activated) according to the normal PDCCH configuration configured with regard to CC#1. The user equipment 20 is detecting that CC#1 is deactivated, but in response to detecting that CC#2 is deactivated, the user equipment 20 deactivates PDCCH monitoring in CC#2. In response to detecting that CC#1 is deactivated and CC#2 is deactivated, the user equipment 20 activates PDCCH monitoring on CC#3 according to PDCCH configuration configured with regard to CC#3.

Subsequently, in step S104 illustrated in FIG. 3, the user equipment 20 detects that CC#1 is activated, CC#2 is deactivated, and CC#3 is activated. Accordingly, the user equipment 20 activates PDCCH monitoring on CC#1 according to the normal PDCCH configuration configured with regard to CC#1. In response to detecting that CC#1 is activated and CC#2 is deactivated, the user equipment 20 deactivates PDCCH monitoring on CC#2 (PDCCH monitoring on CC#2 is not activated). In response to detecting that CC#1 is activated and CC#2 is deactivated, the user equipment 20 deactivates PDCCH monitoring on CC#3 according to PDCCH configuration configured with regard to CC#3.

As described above, in response to a trigger of deactivation of a specific CC, the user equipment 20 starts PDCCH monitoring on another CC in an active state. Additionally, in response to a trigger of activation of the specific CC, the user equipment 20 stops PDCCH monitoring on another CC in an active state.

### (Operation Example 2)

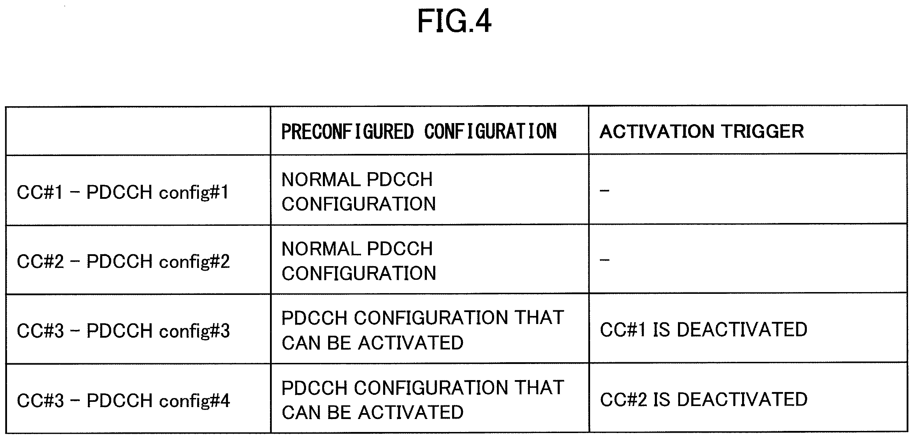

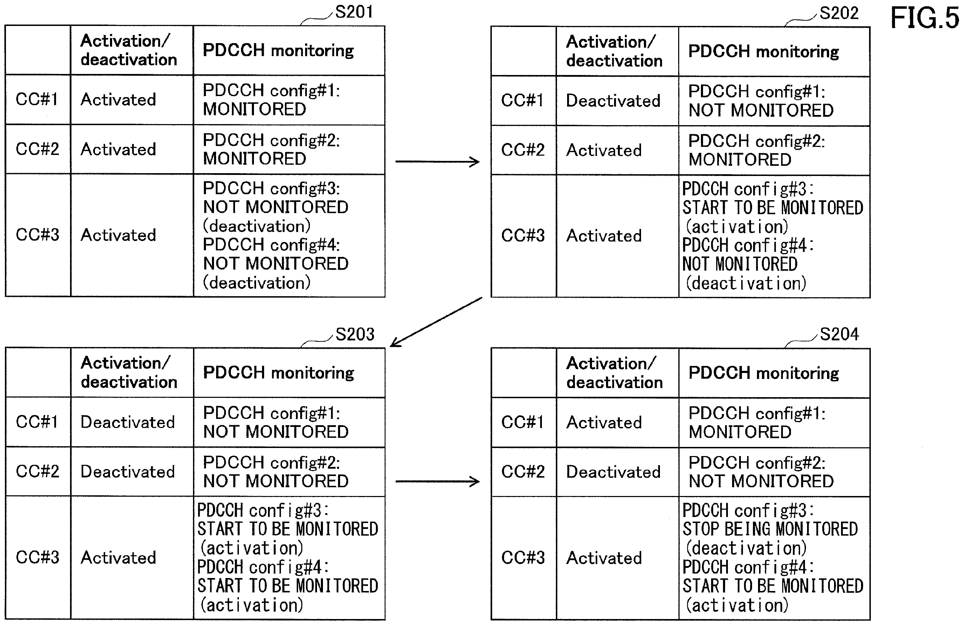

Subsequently, Operation Example 2 of the user equipment 20 is described with reference to FIG. 4 and FIG. 5. As the assumption of the description, the base station 10 and the user equipment 20 are communicating using CC#1, CC#2, and CC#3 at a same time. More specifically, the base station 10 and the user equipment 20 are assumed to be performing carrier aggregation.

FIG. 4 illustrates configuration information (configuration) signaled to the user equipment 20 by RRC signaling and the like.

As illustrated in FIG. 4, for CC#1, the user equipment 20 is configured with a normal PDCCH configuration #1. A trigger of activation of PDCCH monitoring is not particularly configured, but, in accordance with the normal PDCCH configuration #1, when CC#1 is activated, the user equipment 20 activates PDCCH monitoring on CC#1, and when CC#1 is deactivated, the user equipment 20 deactivates PDCCH monitoring on CC#1.

For CC#2, the user equipment 20 is configured with normal PDCCH configuration #2. A trigger of activation of PDCCH monitoring is not particularly set, but, in accordance with the normal PDCCH configuration #2, when CC#2 is activated, the user equipment 20 activates PDCCH monitoring on CC#2, and when CC#2 is deactivated, the user equipment 20 deactivates PDCCH monitoring on CC#2.

For CC#3, the user equipment 20 is configured with PDCCH configuration #3 and PDCCH configuration #4 that reflect a trigger of activation of PDCCH monitoring. More specifically, deactivation of CC#1 is set as a trigger of activation of PDCCH monitoring according to PDCCH configuration #3 on CC#3. Additionally, deactivation of CC#2 is set as a trigger of activation of PDCCH monitoring according to PDCCH configuration #4 on CC#3. Here, an example is described in which a trigger of deactivation is not explicitly set, and the deactivation is determined implicitly according to a trigger of activation. As a trigger of deactivation, a configuration corresponding to a trigger of activation may be explicitly defined.

Subsequently, the details of Operation Example 2 are described with reference to FIG. 5.

First, in step S201 illustrated in FIG. 5, the user equipment 20 detects that CC#1 is activated, CC#2 is activated, and CC#3 is activated. Accordingly, the user equipment 20 activates PDCCH monitoring on CC#1 according to normal PDCCH configuration #1 configured with regard to CC#1. In response to detecting that e CC#2 is activated, the user equipment 20 activates PDCCH monitoring on CC#2 according to normal PDCCH configuration #2 configured with regard to CC#2. In response to detecting that CC#1 is activated and CC#2 is activated, the user equipment 20 deactivates PDCCH monitoring according to PDCCH configuration #3 on CC#3 (i.e., not activates PDCCH monitoring according to PDCCH configuration #3 on CC#3) and deactivates PDCCH monitoring according to PDCCH configuration #4 on CC#3 (i.e., not activates PDCCH monitoring according to PDCCH configuration #4 on CC#3).

Subsequently, in step S202 illustrated in FIG. 5, the user equipment 20 detects that CC#1 is deactivated, CC#2 is activated, and CC#3 is activated. Accordingly, the user equipment 20 deactivates PDCCH monitoring on CC#1 according to normal PDCCH configuration #1 configured with regard to CC#1. In response to detecting that CC#2 is activated, the user equipment 20 activates PDCCH monitoring on CC#2 (i.e., not deactivates PDCCH monitoring on CC#2) according to PDCCH configuration #2 configured with regard to CC#2. In response to detecting that CC#1 is deactivated and that CC#2 is activated, the user equipment 20 activates PDCCH monitoring according to PDCCH configuration #3 on CC#3, and deactivates PDCCH monitoring according to PDCCH configuration #4 on CC#3 (i.e., not activates PDCCH monitoring according to PDCCH configuration #4 on CC#3).

Subsequently, in step S203 as illustrated in FIG. 5, the user equipment 20 detects that CC#1 is deactivated, CC#2 is deactivated, and CC#3 is activated. Accordingly, the user equipment 20 deactivates PDCCH monitoring on CC#1 (not activates PDCCH monitoring on CC#1). In response to detecting that CC#2 is deactivated, the user equipment 20 deactivates PDCCH monitoring on CC#2. In response to detecting that CC#1 is deactivated and CC#2 is deactivated, the user equipment 20 activates PDCCH monitoring according to PDCCH configuration #3 on CC#3 (i.e., not deactivates PDCCH monitoring according to PDCCH configuration #3 on CC#3), and activates PDCCH monitoring according to PDCCH configuration #4 on CC#3.

Subsequently, in step S204 as illustrated in FIG. 5, the user equipment 20 detects that CC#1 is activated, CC#2 is deactivated, and CC#3 is activated. Accordingly, the user equipment 20 activates PDCCH monitoring on CC#1. The user equipment 20 deactivates PDCCH monitoring on CC#2 (i.e., not activates PDCCH monitoring on CC#2). In response to detecting that CC#1 is activated and CC#2 is deactivated, the user equipment 20 deactivates PDCCH monitoring according to PDCCH configuration #3 on CC#3 and activates PDCCH monitoring according to PDCCH configuration #4 on CC#3 (i.e., not deactivates PDCCH monitoring according to PDCCH configuration #4 on CC#3).

As described above, in response to a trigger of deactivation of a specific CC, the user equipment 20 starts PDCCH monitoring on another CC in an active state. Additionally, in response to a trigger of activation of the specific CC, the user equipment 20 stops PDCCH monitoring on another CC in an active state. For a specific CC, a plurality of PDCCH configurations may be configured. For a plurality of PDCCH configurations, different triggers of activation and deactivation of PDCCH monitoring may be set.

### (Trigger of activation and deactivation of PDCCH monitoring)

A trigger of activation of PDCCH monitoring and a trigger of deactivation may be defined by, for example, technical specification documents.

For example, in a case where a single CC is in an active state and there is no other active CC, a trigger of activation of PDCCH monitoring may be defined so that the user equipment 20 automatically starts PDCCH monitoring on a CC in an active state.

For example, in a case where only one CC corresponding to a specific PDCCH monitoring (which may be a specific search space or a specific CORESET) is in an active state, and CCs corresponding to other PDCCH monitoring (which may be other search space or other CORESET) are inactive, a trigger of activation of PDCCH monitoring may be defined so that the user equipment 20 automatically starts the specific PDCCH monitoring.

For example, in a case where a specific CC is in an active state, and PDCCH monitoring on the specific CC is in an active state, if at least one active CC exists other than the specific CC, a trigger of deactivation of PDCCH monitoring may be defined so that the PDCCH monitoring on the specific CC is deactivated.

For example, in a case where a specific CC corresponding to a specific PDCCH monitoring (which may be a specific search space or a specific CORESET) is in an active state, and there is at least one PDCCH monitoring of which corresponding CC is in an active state among other PDCCH monitorings (which may be other search spaces or other CORESETs), a trigger of deactivation of PDCCH monitoring may be defined so that the user equipment 20 automatically stops the specific PDCCH monitoring.

As a modification of the above, for example, as a trigger of activation and a trigger of deactivation of PDCCH monitoring, existence of x other CCs in active states and inactive states is defined as a trigger, and the numerical value x thereof may be signaled to the user equipment 20. For example, as a trigger of activation and a trigger of deactivation of PDCCH monitoring, existence of x PDCCH monitorings (which may be x search spaces or x CORESETs) which are other than the specific PDCCH monitoring and of which corresponding CCs are in active state may be defined as a trigger, and the numerical value x may be signaled to the user equipment 20. Such numerical value x may be signaled to the user equipment 20 on a per PDCCH configuration basis. Alternatively, such numerical value x may be signaled to the user equipment 20 on a per CC basis. Alternatively, such numerical value x may be signaled to the user equipment 20 on a per user equipment 20 basis.

As another example of a trigger of activation and deactivation of PDCCH monitoring, for example, a plurality of CCs may be prioritized, and among active CCs, activations and deactivations of PDCCH monitorings in CCs of the highest level of priority to the x-th level of priority may be defined, and in response to a trigger of activation and deactivation of a CC of the highest level of priority among active CCs, the user equipment 20 may activate or deactivate PDCCH monitoring of a CC of the (x+1)-th level of priority among the active CCs. In the above-described example, a plurality of CCs are prioritized, but those prioritized are not limited to a plurality of CCs. For example, a plurality of PDCCH configurations (which may be a plurality of search space configurations, or a plurality of CORESET configurations) may be prioritized, and activation and deactivation PDCCH monitorings of PDCCH configurations of the highest level of priority to the x-th level of priority among active PDCCH configurations may be defined, and in response to a trigger of activation or deactivation of PDCCH monitoring of the PDCCH configuration of the highest priority among the active PDCCH configurations, the user equipment 20 may activate or deactivate PDCCH monitoring of PDCCH configuration of the (x+1)-th level of priority among the active PDCCH configurations. A numerical value x corresponding to the number of times of performing PDCCH monitoring may be signaled to the user equipment 20 or may be defined by technical specification documents.

A transition of activation and deactivation of PDCCH monitoring in the user equipment 20 may be directly notified from a network to the user equipment 20. This notification may be performed by a signal in any layer. In other words, the notification may be a physical layer signal (a signal including, for example, DCI), a MAC layer signal, or an RRC layer signal. Further, this notification may be notified by a signal of any channel. For example, the notification may be performed by a PBCH signal, a PDCCH signal, a PDSCH signal, and the like. For example, the notification may be performed by using power saving signal/channel or the like. The power saving signal/channel includes PDCCH-based power saving signal/channel, TRS, CSI-RS, DMRS-based power saving signal/channel, SS-based power saving signal/channel, and the like.

In NR Release 16 and later of 3GPP, in addition to active state and inactive state, there is a possibility that dormant state is specified as a CC state. In this dormant state, uplink grant and downlink grant are not transmitted, and only CSI measurement and reporting are performed. In Release 15 of 3GPP, a dormant state was not introduced, but in Release 16 of 3GPP, whether or not dormant state is to be introduced is discussed. Accordingly, throughout the present specification, activations and deactivations, especially, deactivation may be replaced with "deactivation or transition to dormant state."

In addition, throughout this specification, a term "notify" may mean to notify by information in any layer, channel, signal, and the term "notify" may mean either to notify by DCI, notify by MAC, notify by RRC, notify by a signal of PBCH, notify by a signal of PDCCH, or notify by a signal of PDSCH.

### (Device configuration)

Next, a functional configuration example of the base station 10 and the user equipment 20 that perform the processing operations described above is described.

### <Base Station 10>

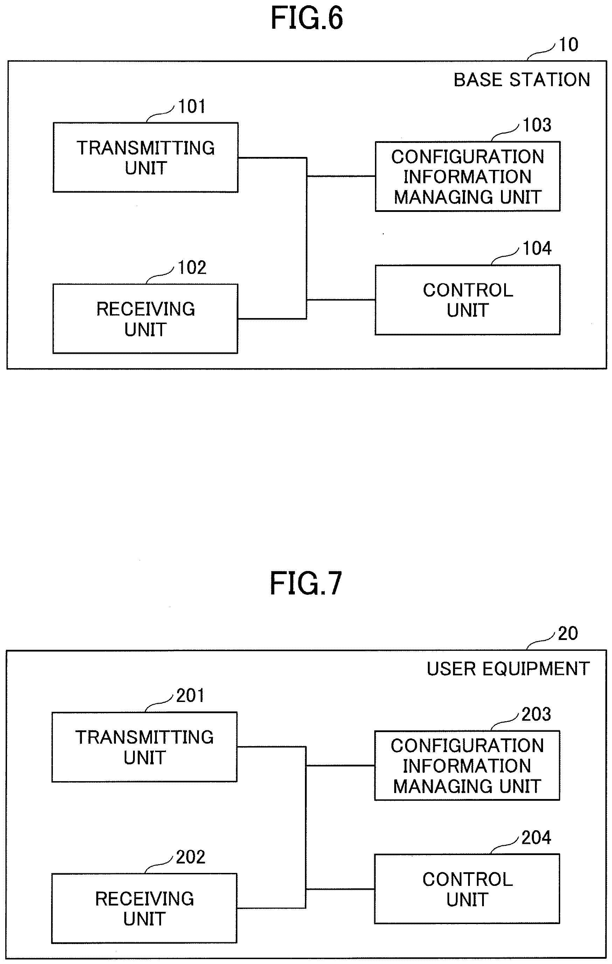

FIG. 6 is a diagram illustrating an example of a functional configuration of the base station 10. As illustrated in FIG. 6, the base station 10 includes a transmitting unit 101, a receiving unit 102, a configuration information managing unit 103, and a control unit 104. The functional configuration illustrated in FIG. 6 is merely one example. The functional division and names of functional units may be any division and names, provided that the operation according to the embodiments of the present invention can be performed. Note that the transmitting unit 101 may be referred to as a transmitter, and the receiving unit 102 may be referred to as a receiver.

The transmitting unit 101 includes a function for generating a signal to be transmitted to the user equipment 20 side and transmitting the signal through radio. The receiving unit 102 includes a function for receiving various types of signals transmitted from the user equipment 20 through radio and obtaining a higher layer signal from the received signal. Furthermore, the receiving unit 102 includes a function for measuring a received signal to obtain a quality value.

The configuration information managing unit 103 stores preconfigured configuration information, configuration information received from the user equipment 20, and the like. Note that configuration information related to transmission may be stored in the transmitting unit 101, and configuration information related to reception may be stored in the receiving unit 102. The control unit 104 controls the base station 10. Note that a function of the control unit 104 related to transmission may be included in the transmitting unit 101, and a function of the control unit 104 related to reception may be included in the receiving unit 102.

### <User equipment 20>

FIG. 7 is a diagram illustrating an example of a functional configuration of the user equipment 20. As illustrated in FIG. 7, the user equipment 20 includes a transmitting unit 201, a receiving unit 202, a configuration information managing unit 203, and a control unit 204. The functional configuration illustrated in FIG. 7 is merely an example. The functional division and names of functional units may be any division and names, provided that the operation according to the embodiments can be performed. Note that the transmitting unit 201 may be referred to as a transmitter, and the receiving unit 202 may be referred to as a receiver. Furthermore, the user equipment 20 may be the transmitting user equipment 20A or the receiving user equipment 20B.

The transmitting unit 201 generates a transmitting signal from transmitting data and transmits the transmitting signal through radio. The receiving unit 202 receives various types of signals and obtains a higher layer signal from the received physical layer signal. The receiving unit 220 includes a function for measuring a received signal and obtaining a quality value. The configuration information managing unit 203 stores preconfigured configuration information, configuration information received from the base station 10, and the like. The configuration information managing unit 203 may store information on a configuration of carrier aggregation. Note that configuration information related to transmission may be stored in the transmitting unit 201 and configuration information related to reception may be stored in the receiving unit 202. The control unit 204 controls the user equipment 20. Note that the function of the control unit 204 related to transmission may be included in the transmitting unit 201, and the function of the control unit 204 related to reception may be included in the receiving unit 202.

For example, the control unit 204 may activate and deactivate PDCCH monitoring operation on the basis of information indicating activation and deactivation of a CC which the receiving unit 202 receives from the base station 10.

### <Hardware configuration>

The block diagrams (FIG. 6 to FIG. 7) used for the description of the above embodiments show blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices. Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

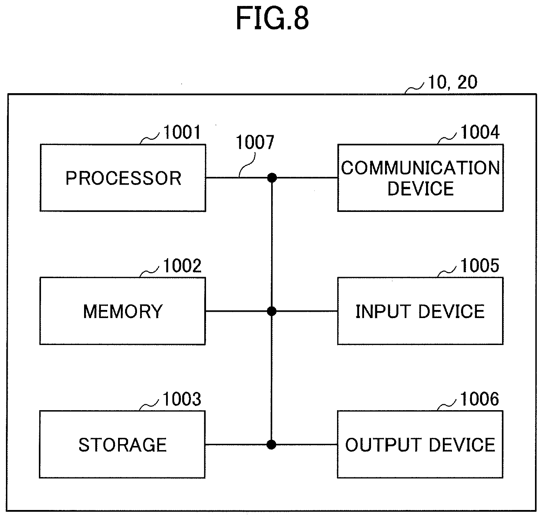

For example, the user equipment 20 and the base station 10 according to the embodiments of the present invention may function as computers performing the process of the radio communication according to the embodiments of the present invention. FIG. 8 is a diagram illustrating an example of a hardware configuration of the user equipment 20 and the base station 10 according to the embodiments. Each of the above-described user equipment 20 and base station 10 may be physically configured as a computer device including a processor 1001, a memory 1002, a storage 1003, a communication device 1004, an input device 1005, an output device 1006, a bus 1007, and the like.

Note that, in the following description, the term "device" can be replaced with a circuit, a device, a unit, and so forth. The hardware configuration of the user equipment 20 and the base station 10 may be configured to include one or more of the devices depicted in the figures, which are indicated by 1001 through 1006, or may be configured without some devices.

Each function of the user equipment 20 and the base station 10 is implemented by loading predetermined software (program) on hardware, such as the processor 1001 and the memory 1002, so that the processor 1001 performs computation and controls communication by the communication device 1004, and at least one of reading and writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, and the like. For example, the above-described baseband signal processing unit 104, call control unit 105, and the like may be implemented by the processor 1001.

Additionally, the processor 1001 reads a program (program code), a software module, data, and so forth, from at least one of the storage 1003 and the communication device 1004 to the memory 1002, and executes various processes according to these. As the program, a program is used which causes a computer to execute at least a part of the operations described in the above-described embodiments. For example, the control unit 401 of the user equipment 20 may be implemented by a control program that is stored in the memory 1002 and that is operated by the processor 1001, and another functional block may be implemented similarly. The above-described various processes are described to be implemented by a single processor 1001. However, the above-described various processes may be executed simultaneously or sequentially by two or more processors 1001. The processor 1001 may be implemented by one or more chips. The program may be transmitted from a network via a telecommunications line.

The memory 1002 is a computer readable storage medium, and, for example, the memory 1002 may be formed of at least one of a Read Only Memory (ROM), an Erasable Programmable ROM (EPROM), an Electrically Erasable Programmable ROM (EEPROM), a Random Access Memory (RAM), and so forth. The memory 1002 may be referred to as a register, a cache, a main memory (main storage device), or the like. The memory 1002 may store a program (program code), a software module, or the like, which can be executed for implementing the radio communication method according to the embodiments of the present disclosure.

The storage 1003 is a computer readable storage medium and may be formed of, for example, at least one of an optical disk, such as a CD-ROM (Compact Disc ROM), a hard disk drive, a flexible disk, an optical magnetic disk (e.g., a compact disk, a digital versatile disk, a Blu-ray (registered trademark) disk), a smart card, a flash memory (e.g., a card, a stick, a key drive), a floppy (registered trademark) disk, a magnetic strip, etc. The storage 1003 may be referred to as an auxiliary storage device. The above-described storage medium may be, for example, a database including at least one of the memory 1002 and the storage 1003, a server, or any other suitable medium.

The communication device 1004 is hardware (transmitting and receiving device) for performing communication between computers through at least one of a wired network and a wireless network, and is also referred to, for example, as a network device, a network controller, a network card, a communication module, and so forth. The communication device 1004 may be configured to include, for example, a high frequency switch, a duplexer, a filter, a frequency synthesizer, and so forth, to implement at least one of frequency division duplex (FDD: Frequency Division Duplex) and time division duplex (TDD: Time Division Duplex). For example, the above-described transmitting and receiving antenna 101, an amplifier 102, the transmitting and receiving unit 103, a transmission line interface 106 and the like may be implemented by the communication device 1004. The transmitting and receiving unit 103 may be implemented so that a transmitting unit 103a and a receiving unit 103b are physically or logically separated.

The input device 1005 is an input device (e.g., a keyboard, mouse, microphone, switch, button, sensor, or the like) that receives an external input. The output device 1006 is an output device (e.g., a display, speaker, LED lamp, or the like) that implements an external output. The input device 1005 and the output device 1006 may have an integrated configuration (for example, a touch panel).

Each device, such as the processor 1001 and the memory 1002, is also connected by the bus 1007 for communicating information. The bus 1007 may be formed of a single bus or may be formed of different buses between devices.

The user equipment 20 and the base station 10 may each include hardware, such as a microprocessor, a digital signal processor (DSP: Digital Signal Processor), an Application Specific Integrated Circuit (ASIC), a Programmable Logic Device (PLD), and a Field Programmable Gate Array (FPGA), which may implement some or all of each functional block. For example, processor 1001 may be implemented using at least one of these hardware components.

### (Conclusion of the embodiments)

In this specification, at least the following communication apparatus and channel state information measuring method are disclosed.

A user equipment including a receiving unit configured to receive a downlink signal; and a control unit configured to select a second component carrier in an active state for monitoring a downlink control channel among a plurality of component carriers, in response to deactivation of a first component carrier in an active state among the plurality of component carriers.

According to the above configuration, in a case where the user equipment uses a single CC to perform PDCCH monitoring, receives a DCI, and performs scheduling of PDSCH/PUSCH, or the like for another CC, and when the single CC on which the PDCCH monitoring is performed is deactivated, the user equipment can quickly switch the CC on which PDCCH monitoring is performed.

The control unit may preconfigure a plurality of monitor configurations for monitoring the downlink control channel for the second component carrier in the active state for monitoring the downlink control channel, and in response to the deactivation of the first component carrier in the active state, the control unit may activate a monitor configuration among the plurality of monitor configurations to be activated upon deactivation of the first component carrier, and the control unit may monitor the downlink control channel in the second component carrier based on the monitor configuration.

The plurality of monitor configurations may specify different time and frequency resources, as resources for monitoring the downlink control channel.

After the control unit starts monitoring the downlink control channel on the second component carrier in response to deactivation of the first component carrier, the control unit may stop monitoring the downlink control channel on the second component carrier and start monitoring the downlink control channel on the first component carrier, in response to reactivation of the first component carrier.

A communication method by a user equipment, the method including: receiving a downlink signal; and selecting a second component carrier in an active state for monitoring a downlink control channel among a plurality of component carriers, in response to deactivation of a first component carrier in an active state among the plurality of component carriers.

According to the above configuration, in a case where the user equipment uses a single CC to perform PDCCH monitoring, receives a DCI, and performs scheduling of PDSCH/PUSCH, or the like for another CC, and when the single CC on which the PDCCH monitoring is performed is deactivated, the user equipment can quickly switch the CC on which PDCCH monitoring is performed.

### (Supplemental Embodiments)

While the embodiments of the present invention are described above, the disclosed invention is not limited to the embodiments, and those skilled in the art will appreciate various alterations, modifications, alternatives, substitutions, etc. Descriptions are provided using specific numerical examples to facilitate understanding of the invention, but, unless as otherwise specified, these values are merely examples and any suitable value may be used. Classification of the items in the above descriptions is not essential to the present invention, and the items described in two or more items may be used in combination as needed, or the items described in one item may be applied (provided that there is no contradiction) to the items described in another item. The boundaries of functional units or processing units in the functional block diagram do not necessarily correspond to the boundaries of physical components. An operation by a plurality of functional units may be physically performed by one component or an operation by one functional unit may be physically executed by a plurality of components. For the processing procedures described in the embodiments, the order of processing may be changed as long as there is no contradiction. For the convenience of the description of the process, the user equipment 20 and the base station 10 are described using functional block diagrams, but such devices may be implemented in hardware, software, or a combination thereof. Software operated by a processor included in the user equipment 20 in accordance with embodiments of the present invention and software operated by a processor included in the base station 10 in accordance with embodiments of the present invention may be stored in a random access memory (RAM), a flash memory (RAM), a read-only memory (ROM), an EPROM, an EEPROM, a register, a hard disk (HDD), a removable disk, a CD-ROM, a database, a server, or any other suitable storage medium, respectively.

Notification of information is not limited to the aspects/embodiments described in the disclosure, and notification of information may be made by another method. For example, notification of information may be implemented by physical layer signaling (e.g., Downlink Control Information (DCI), Uplink Control Information (UCI), higher layer signaling (e.g., Radio Resource Control (RRC) signaling, Medium Access Control (MAC) signaling, broadcast information (Master Information Block (MIB), System Information Block (SIB))), or other signals or combinations thereof. RRC signaling may be referred to as an RRC message, for example, which may be an RRC connection setup message, an RRC connection reconfiguration message, etc.

The aspects/embodiments described in this disclosure may be applied to a system using at least one of Long Term Evolution (LTE), LTE-Advanced LTE-A), SUPER 3G, IMT-Advanced, 4th generation mobile communication system (4G), 5th generation mobile communication system (5G), Future Radio Access (FRA), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), any other appropriate system, and a next generation system extended based on theses. Additionally, a plurality of systems may be combined (e.g., a combination of at least one of LTE and LTE-A and 5G) to be applied.

The processing procedures, sequences, flow charts, or the like of each aspect/embodiment described in this disclosure may be reordered, provided that there is no contradiction. For example, the methods described in this disclosure present elements of various steps in an exemplary order and are not limited to the particular order presented.

The particular operation described in this disclosure to be performed by the base station 10 may be performed by an upper node in some cases. It is apparent that in a network consisting of one or more network nodes having the base station 10, various operations performed for communicating with the communication apparatus may be performed by at least one of the base station 10 and a network node other than the base station 10 (e.g., MME or S-GW can be considered, however, the network node is not limited to these). The case is exemplified above in which there is one network node other than the base station 10. However, the network node other than the base station 10 may be a combination of multiple other network nodes (e.g., MME and S-GW).

Input and output information and so forth may be stored in a specific location (e.g., memory) or managed using management tables. Input and output information and so forth may be overwritten, updated, or added. Output information or the like may be deleted. The input information or the like may be transmitted to another device.

The determination may be made by a value (0 or 1) represented by 1 bit, by a true or false value (Boolean: true or false), or by comparison of numerical values (e.g., a comparison with a predefined value).

The aspects/embodiments described in this disclosure may be used alone, in combination, or switched with implementation. Notification of predetermined information (e.g. "X" notice) is not limited to a method that is explicitly performed, and may also be made implicitly (e.g. "no notice of the predetermined information").

Software should be broadly interpreted to mean, regardless of whether referred to as software, firmware, middleware, microcode, hardware description language, or any other name, instructions, sets of instructions, code, code segments, program code, programs, subprograms, software modules, applications, software applications, software packages, routines, subroutines, objects, executable files, executable threads, procedures, functions, and the like.

Software, instructions, information, and the like may also be transmitted and received via a transmission medium. For example, when software is transmitted from a website, server, or other remote source using at least one of wireline technology (such as coaxial cable, fiber optic cable, twisted pair, digital subscriber line (DSL: Digital Subscriber Line)) and wireless technology (infrared, microwave, etc.), at least one of these wireline technology and wireless technology is included within the definition of a transmission medium.

The information, signals, and so forth described in this disclosure may be represented using any of a variety of different techniques. For example, data, instructions, commands, information, signals, bits, symbols, chips, etc., which may be referred to throughout the above description may be represented by voltages, currents, electromagnetic waves, magnetic fields or magnetic particles, optical fields or photons, or any combination thereof.

The terms described in this disclosure and those necessary for understanding this disclosure may be replaced with terms having the same or similar meanings. For example, at least one of the channels and the symbols may be a signal (signaling). The signal may also be a message. Furthermore, a component carrier (CC: Component Carrier) may be referred to as a carrier frequency, a cell, a frequency carrier, or the like.

As used in this disclosure, the terms "system" and "network" are used interchangeably. The information, parameters, and the like described in the present disclosure may also be expressed using absolute values, relative values from predetermined values, or they may be expressed using corresponding separate information. For example, radio resources may be those indicated by an index.

The name used for the parameters described above are not restrictive in any respect. In addition, the mathematical equations using these parameters may differ from those explicitly disclosed in this disclosure. Since the various channels (e.g., PUCCH, PDCCH, or the like) and information elements can be identified by any suitable name, the various names assigned to these various channels and information elements are not in any way limiting.

In this disclosure, the terms "Base Station (BS: Base Station)," "Radio Base Station," "Fixed Station," "NodeB," "eNodeB (eNB)," "gNodeB (gNB)," "Access Point," "Transmission Point," "Reception Point," "Transmission/Reception Point," "Cell," "Sector," "Cell Group," "Carrier," "Component Carrier," and the like, may be used interchangeably. The base station may be called by a term, such as macro-cell, small-cell, femto-cell, or pico-cell.

The base station can accommodate one or more (e.g., three) cells. Where the base station accommodates a plurality of cells, the entire coverage area of the base station can be divided into a plurality of smaller areas, each smaller area can also provide communication services by means of a base station subsystem (e.g., an indoor small base station (RRH) or a remote Radio Head). The term "cell" or "sector" refers to a portion or all of the coverage area of at least one of the base station and base station subsystem that provides communication services at the coverage.

In this disclosure, terms such as "mobile station (MS: Mobile Station)", "user terminal", "user equipment (UE: User Equipment)", "terminal", or the like may be used interchangeably.

A mobile station may be referred to by one of ordinary skill in the art as a subscriber station, a mobile unit, a subscriber unit, a wireless unit, a remote unit, a mobile device, a wireless device, a wireless communication apparatus, a remote device, a mobile subscriber station, an access communication apparatus, a mobile communication apparatus, a wireless communication apparatus, a remote communication apparatus, a handset, a user agent, a mobile client, a client, or some other suitable term.

At least one of a base station and a mobile station may be referred to as a transmitter, receiver, a communication apparatus, etc. At least one of a base station and a mobile station may be a device installed in a mobile body, a mobile body itself, etc. The mobile body may be a vehicle (e.g., a car, an airplane, etc.), an unmanned mobile (e.g., a drone, an automated vehicle, etc.), or a robot (manned or unmanned). At least one of a base station and a mobile station includes a device that does not necessarily move during communication operations. For example, at least one of a base station and a mobile station may be an Internet of Things (IoT) device such as a sensor.

In addition, the base station in the present disclosure may be read by the user terminal. For example, various aspects/embodiments of the present disclosure may be applied to a configuration in which communication between the base stations and the user terminal is replaced with communication between multiple user terminals (e.g., may be referred to as Device-to-Device (D2D), Vehicle-to-Everything (V2X), etc.). In this case, a configuration may be such that the above-described function of the base station 10 is included in the user terminal 20. The terms "up" and "down" may also be replaced with the terms corresponding to communication apparatus-to-communication apparatus communication (e.g., "side"). For example, an uplink channel, a downlink channel, etc., may be replaced with a sidelink channel.

Similarly, a user equipment according to the present disclosure may be replaced with a base station. In this case, a configuration may be such that, the function included in the above-described user equipment 20 is included in the base station 10.

The term "connected" or "coupled" or any variation thereof means any direct or indirect connection or connection between two or more elements and may include the presence of one or more intermediate elements between two elements "connected" or "coupled" with each other. The coupling or connection between the elements may be physical, logical, or a combination of these. For example, "connection" may be replaced with "access." As used in the present disclosure, the two elements may be considered as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS (Reference Signal) or may be referred to as a pilot, depending on the standards applied.

As used in this disclosure, the expression "based on" does not mean "based on only" unless otherwise specified. In other words, the expression "based on" means both "based on only" and "at least based on."

As long as "include," "including," and variations thereof are used in this disclosure, the terms are intended to be inclusive in a manner similar to the term "comprising." Furthermore, the term "or" used in the disclosure is intended not to be an exclusive OR.

In the present disclosure, for example, if an article is added by translation, such as a, an, and the in English, the present disclosure may include that the noun following the article is plural.

In the present disclosure, the term "A and B are different" may imply that "A and B are different from each other." Note that the term may also imply "each of A and B is different from C." The terms, such as "separated," "coupled," etc., may also be interpreted similarly.

While the present invention is described in detail above, those skilled in the art will appreciate that the present invention is not limited to the embodiments described in this specification. The present invention may be implemented as modifications and variations without departing from the gist and scope of the present invention as defined by the claims. Accordingly, the description of the specification is for illustrative purposes only and is not intended to have any restrictive meaning with respect to the present invention.

### LIST OF REFERENCE SYMBOLS

- 101: transmitting unit
- 102: receiving unit
- 103: configuration information managing unit
- 104: control unit
- 201: transmitting unit
- 202: receiving unit
- 203: configuration information managing unit
- 204: control unit
- 1001: processor
- 1002: memory
- 1003: storage
- 1004: communication device
- 1005: input device
- 1006: output device

## Claims

1. A user equipment comprising:
a receiving unit configured to receive a downlink signal; and
a control unit configured to select a second component carrier in an active state for monitoring a downlink control channel among a plurality of component carriers, in response to deactivation of a first component carrier in an active state among the plurality of component carriers.

2. The user equipment according to claim 1,
wherein the control unit preconfigures a plurality of monitor configurations for monitoring the downlink control channel for the second component carrier in the active state for monitoring the downlink control channel of the downlink, and
in response to the deactivation of the first component carrier in the active state, the control unit activates a monitor configuration among the plurality of monitor configurations to be activated upon deactivation of the first component carrier, and the control unit monitors the downlink control channel in the second component carrier based on the monitor configuration.

3. The user equipment according to claim 1,
wherein the plurality of monitor configurations specifies different time and frequency resources, as resources for monitoring the downlink control channel.

4. The user equipment according to claim 1,
wherein after the control unit starts monitoring the downlink control channel on the second component carrier in response to deactivation of the first component carrier, the control unit stops monitoring the downlink control channel on the second component carrier and starts monitoring the downlink control channel on the first component carrier, in response to reactivation of the first component carrier.

5. The user equipment according to claim 1,
wherein the receiving unit receives a signal including information indicating a trigger for activating monitoring of the downlink control channel, information indicating a trigger for deactivating monitoring of the downlink control channel, or a combination thereof.

6. A communication method by a user equipment, the method comprising:
receiving a downlink signal; and
selecting a second component carrier in an active state for monitoring a downlink control channel among a plurality of component carriers, in response to deactivation of a first component carrier in an active state among the plurality of component carriers.
